Europäisches Patentamt

European Patent Office

Office européen des brevets

(19)

(11) Publication number: **0 236 141 B1**

## EUROPEAN PATENT SPECIFICATION

(12)

(45) Date of publication of patent specification: **11.11.92**

(51) Int. Cl.5: **H02G 15/013,** H02G 15/076, H01B 17/30

(21) Application number: **87301936.8**

(22) Date of filing: **05.03.87**

(54) **Method and device for sealing cables.**

(30) Priority: **06.03.86 DE 3607355**

(43) Date of publication of application:
**09.09.87 Bulletin  87/37**

(45) Publication of the grant of the patent:
**11.11.92 Bulletin  92/46**

(84) Designated Contracting States:
**BE DE ES FR GB IT**

(56) References cited:
**EP-A- 0 094 848       DE-A- 2 131 830**
**FR-A- 2 519 203       GB-A- 2 100 940**
**US-A- 3 236 934       US-A- 4 079 193**

(73) Proprietor: **Walter Rose GmbH & Co. KG**
**Lütkenheider Strasse 2**
**W-5800 Hagen 1(DE)**

(72) Inventor: **Fremgen, Dieter**
**Hans-Boeckler-Strasse 46**
**W-5603 Wuelfrath(DE)**
Inventor: **Papenheim, Friedbert**
**Ernststrasse 7**
**W-5860 Iserlohn 7(DE)**

(74) Representative: **Patentanwälte Meinke und**
**Dabringhaus Dipl.-Ing. J. Meinke Dipl.-Ing. W.**
**Dabringhaus**
**Westenhellweg 67**
**W-4600 Dortmund 1(DE)**

## Description

The present invention relates to a method and device for sealing a plurality of cables to a base comprising apertured first and second plates through which they may pass.

Heat recoverable articles are well known, as is their use to seal objects. They can be produced large enough easily to surround the object to be sealed and then recovered into close contact therewith. As a result installation is easy, and close tolerances in manufacture are not necessary.

A heat recoverable article is an article the dimensional configuration of which may be made substantially to change when subjected to heat treatment. Usually these articles recover, on heating, towards an original shape from which they have previously been deformed, but the term "heat shrinkable", as used herein, also includes an article which, on heating, adopts a new configuration even if it has not been previously deformed.

In their most common form, such articles comprise a heat-shrinkable sleeve or tube made from a polymeric material exhibiting the property of elastic of plastic memory as described, for example in U.S. Patent Nos 2,027,962 and 3086,242. The original dimensionally heat stable form may be a transient form in a continuous process in which, for example, an extruded tube is expanded, whilst hot, to a dimensionally heat unstable form but, in other applications, a preformed dimensionally heat stable article is deformed to a dimensionally heat unstable form in a separate stage. These patents and other patents and applications mentioned in this specification are incorporated herein by reference.

In the production of heat-recoverable articles, the polymeric material may be cross-linked at any stage in the production of the article that will enhance the desired dimensional recoverability. One manner of producing a heat-recoverable article comprises shaping the polymeric material into the desired heat stable form, subsequently cross linking the polymeric material, heating the article to a temperature above the crystalline melting point or, for amorphous materials the softening point, as the case may be, of the polymer, deforming the article whilst in the deformed state so that the deformed state of the article is retained. In use, since the deformed state of the article is heat unstable, application of heat will cause the article to assume its original heat stable shape.

Recoverable articles may be made in many configurations depending on the seal to be made. For example, to enclose a simple in-line joint between two wires or cables, a sleeve-shaped or tubular recoverable article may be used.

Another application in which it is known to use an heat recoverable article is to seal the cable breakout region in a so-called "radial distribution closure". Such a closure is used to seal the splice for radial distribution of individual pairs of telephone wires from a given location along a main cable to several individual telephone receivers. The closure typically comprises a domed cannister secured to a base, the main cable passing into and out of the domed cannister through an opening in the base, and the pairs to be separated out are led out of the cannister through further openings in the base thereof.

A radial distribution closure of the type described above, used by British Telecom is know as a 31x closure. A similar closure is described in UK Patent No. 1334919 where a sealing ring and a clamping screw secure a domed part to a base through which cables pass.

The requirement in the radial distribution closure is to seal the openings in the base, through which the cables pass, to the cables. A number of methods of doing this are known, some of which use a heat recoverable article. For example European Patent Publication No. 68781 (RK147) describes a hollow body portion and a plurality of radially shrinking tubular cable outlets extending from the base of the body portion for sealing to the cables. The length and flexibility of the outlets described in this reference are such that the outlets can be bent away from each other to permit each to be recovered in isolation from the others. A modification to this approach is described in European Patent Publication No. 0094848 (B084). In this case the base of the closure is fitted with one or more radially shrinkable cable outlets on both sides of the base.

Yet another approach is described in DE OS 3125044. In this case the cable outlets provided are discrete. Each cable outlet can be inserted into an opening in the base, and has two stop flanges at its insertion end. The region between the stop flanges is heat shrinkable in the axial direction, and the other end region (which projects outside the body) is radially heat shrinkable to seal to the cables.

Each opening in the base has an edge recess and each cable outlet an end stop flange in the form of projections which match the edge recesses in the base. Thus each cable outlet can be inserted into its assigned opening in the manner of a bayonet catch. By subsequent heating in the stop flange region, axial shrinkage tightens the outlet against the base. This latter device has not, however, gained acceptance in practice. Owing to their shrinkability in two mutually perpendicular directions, the cable outlets are relatively difficult to manufacture and also to shrink on. In addition, the shaping of the openings in the base and of the correspondingly formed end flanges of the cable outlets for the purpose of fastening in the manner of a bayonet catch is also relatively difficult.

Two other devices are known from FR-A-2 519 203 and US-A-3 236 934. FR-A-2 519 203 describes a base for a splice case in which two apertured plates copress O-ring gaskets directly between them, causing the O-ring to spread transversely to seal against cables passing through the apertures in the plates. US-A-3 236 934 is a more complex arrangement again describing a base for a splice case. In this case the base comprises two plates which are spaced from each other. Two sets of tapered boots (rubber and metal) seal the cables to the inner and outer plates, and these boots are held in place by annular keepers. A brass metal shield surrounds the cables between the plates. The region surrounding the cables and within the boots and shield is then filled with epoxy petting compound.

In all the prior art references referred to above it is impossible, or at least very difficult to replace the cable outlets individually. In the closures described in European Patent Publication Nos. 68781 and 94848 the outlets are formed integrally with the base, and in DE 3125044, once the cable outlets have been firmly shrunk onto the base it is virtually impossible to remove them. Thus if one cable outlet is to be replaced, the entire base with all the outlets needs to be replaced. This is a disadvantage for some applications.

The present invention provides a method and a device for sealing cables to a body through which they pass, which device is particularly useful for sealing the cables entering a radial distribution closure to openings in the base thereof.

According to the invention a method of sealing a plurality of cables to a base comprising apertured first and second plates through which they pass, is characterized by:

a) inserting a plurality of cable outlets, each having a cylindrical body and an end flange extending from one end thereof, through an opening in the first plate so that each end flange of respective cable outlets cooperates with a shoulder in the first plate,

b) securing the second plate adjacent the first plate to sandwich the flanges of the cable outlets between the first and second plates, and thereby prevent relative axial movement of the end plates of the cable outlets and the plates and

c) inserting cables into the cable outlets and shrinking the outlets onto the inserted cables.

To fullfill the task of the invention it provides as well an assembly for sealing a plurality of cables to a base through which they pass, wherein a base comprising first and second plates having a plurality of corresponding openings therein, through each of which one or more cables may pass, which is characterised in that:

a) at least one of the said first and second plates is provided in the region of each opening therethrough with an annular shoulder and

b) a plurality of cable outlets which can be removably inserted into respective opening in the base and which each have an end flange which cooperates with the shoulder in the said plate;

c) wherein the plates themselves, and the openings in the plates are arranged so that the plates can sandwich the flanges of the cable outlets between them, thereby substantially preventing relative axial movement between the end flanges of the cable outlets and the plates.

In a preferred embodiment the base can be secured to a cover to form a hollow enclosure.

As used herein no limitations as to shape and size are intended by the terms base and cover. The term base simply means that part of the article through which the cables or other substrates pass and to which the recoverable outlets are sealed.

There are a number of advantages of the present invention. The cable outlets and also the openings in the plates are simple to manufacture. Also mounting of the cable outlets in the base is simpler than that described in DE 3125044 since no shrinkage operation is required to fasten the cable outlets to the body. Furthermore the present invention allows subsequent replacement of individual cable outlets, which is not provided by any of the references referred to. This is done simply by separating the two plates and replacing the cable outlet received therebetween. This does not effect the base which can be reused with the new cable outlets.

In a preferred embodiment for a radial distribution closure the base is plate like, and generally disc-shaped and a cover is provided, which is dome-shaped and secured to the base to form a completely sealed enclosure.

One or both of the plates may comprise a shoulder in the vicinity of the openings therethrough. The purpose of the shoulder is to accommodate the flange on the end of the cable outlet so that flange is sandwiched between the plates and relative movement between the cable outlets and the plates in a direction axially of the outlets is substantially prevented. The shoulder is preferably on that surface of a plate which faces another plate.

The two plates are preferably placed to overlie each other. In a preferred embodiment the plates are positioned so that when assembled with a cover the first plate lies outwardly of the enclosure, and the second plate lies inwardly of the enclosure. With this construction the shoulder is preferably provided around the openings in the first plate. This is convenient for installation of the cable outlets in the base. Thus, for example the base can be held at a substantially horizontal orientation with the first plate uppermost, and the cable outlets simply supplied through the openings in the first plate until the flanges thereof abut against and thus cooperate with the shoulder on the first plate. The second plate can then be placed on top of the first plate to sandwich the flanges of the cable outlets the between the shoulder in the first plate and the second plate. In this arrangement the openings in the second plate are preferably substantially in alignment with the inner diameter of the associated cable outlet.

Assuming the same configuration wherein the first and second plates face outwardly and inwardly of the enclosure respectively, the shoulder may alternatively be provided around the openings in the second (inner plate), on the surface of the second plate which contacts the first plate on installation. In a similar manner to that described above the first plate can then be brought into contact with the second plate to sandwich the end flanges of the cable outlet between the plates.

Also shoulders can be provided in both plates, on those surfaces which contact each other when the plates are brought together.

The cable outlets can be any suitable shape. Preferably they are tubular, preferably of uniform cross-section, preferably of uniform wall thickness. The flange on the cable outlets preferably extends radially outwards at one end of the cable outlets. Preferably the cable outlets are radially shrinkable.

Preferably, a sealing ring or a sealing composition is provided between each annular shoulder and the end flange of the associated cable outlet.

In a preferred embodiment, the plate that faces towards the inside of the enclosure, when the base is secured to a cover, has a diameter which is smaller than that of the plate that faces towards the outside, such that an end flange of a cover can be secured to the edge of the plate that faces towards the outside of the thus formed enclosure. In this arrangement, it is advantageous that an approximately triangular annular space for receiving a sealing agent is formed between the end flange of the cover and the edges of the two plates.

Also, in a preferred embodiment each opening in one or both of the plates, preferably in the plate towards the outside of the enclosure when the base is attached to a cover is provided with a breakable closure, so that all openings are sealed until they are required.

In one embodiment the base comprises holes of different sizes. Thus the base can be used to seal to a wide variety of different sized cables. While the heat recoverable nature of the outlets allows some variation in the size of cables which can be sealed by a single sized opening, if there is a considerable size difference in the cables to be sealed it is preferred that different sized base openings and correspondingly different sized cable outlets are used.

The openings are preferably circular, or for example eliptical.

A preferred assembly according to the present invention additionally comprises a plug member. This can be used to seal an existing cable outlet no longer required. The plug is selected to be similarly sized to the cable outlet to be replaced, and preferably has a flange thereon corresponding to the flange on the outlet to be removed. To install the plug the plates are separated and the cable outlet simply removed and replaced by the plug.

A further assembly according to the present invention additionally comprises a cover which can be sealed to the base to form a hollow enclosure.

The invention also provides an assembled part made by assembling the component parts of any assembly according to the present invention.

An embodiment of the invention will now be described, by way of example, with reference to the accompanying drawings in which:

Figure 1 shows a longitudinal section through an assembly according to the invention, and

Figure 2 shows and end view in the direction of the arrow A in Figure 1.

A dome shaped cover 1 is provided with an end flange 2 which can be connected in gas-tight and liquid-tight manner by means of a clamping ring 3 to a base designated generally by reference 4. The cover 1 and base 4 together provide a hollow enclosure.

The base 4 itself comprises two plates 5 and 12. First plate 5 is positioned outwards of the enclosure and second plate 12 inwardly of the enclosure. The first plate 5 is provided with a number of circular openings 6 of different sizes and with larger eliptical opening 7. Each opening has an annular shoulder 8 on which there is supported, with the interposition of a sealing ring 11, an end flange 9 of a generally tubular cable outlet 10 which is heat-shrinkable in the radial direction.

The second plate 12 is positioned adjacent plate 5, towards the inside of the enclosure plate 12. Plate 12 is also provided with openings 13 and 14. The openings 13 and 14 correspond to the openings 6 and 7 respectively in plate 5, and are slightly smaller in diameter than openings 6 and 7. The openings 13 and 14 of plate 12 are in alignment with the inner diameters of the cable outlets 10 inserted into the openings 6 and 7 of plate 5. Thus the end flanges 9 of the cable outlets 10 are sandwiched and fixed in sealing manner between the annular shoulders 8 in plate 5 and plate 12 (which is towards the inside of the enclosure). Plate 12 has a slightly smaller diameter than that of the plate 5, such that, on tightening the outer edge of the plate 5 to the end flange 2 of the cover 1 by means of the clamping ring 3, the inner plate 12 is fixed in the correct position with respect to the plate 5. In so doing, a sealing means 15 is formed in a triangular annular space between the end flange 2 and the edges of the plates 5 and 12.

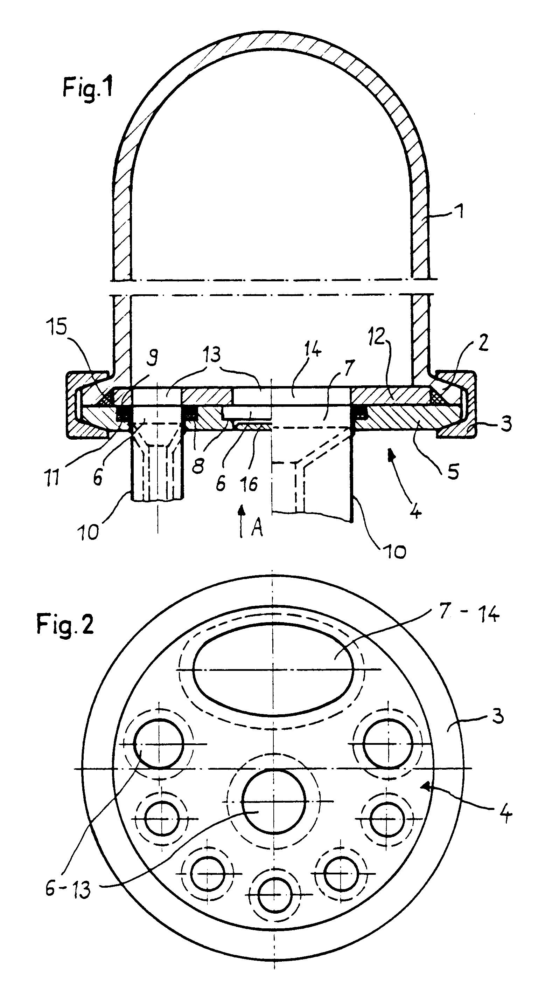

Each opening 6, 7 in plate 5 (the outer plate) is provided in its initial state with a breakable closure 16. Such a closure is indicated in Figure 1 in circular opening 6. The provision of the breakable closures means that any opening which is not required for cable insertion is already closed. This avoids the need for subsequent insertion of a closure or plug in non required openings.

Installation of cables in the device of the invention involves the following sequence. The required cable outlets 10 are inserted into plate 5 (the outer plate). Plate 12 (the inner plate) is then placed over plate 5, and both plates are secured to the cover 1 by tightening clamping ring 3. Finally the cables (not shown) are inserted into cable outlets 10 and the cable outlets 10 shrunk onto the inserted cables. The position of the cable outlets 10 after shrinkage is indicated by the dotted lines in Figure 1.

It is also possible, according to the invention, to reclose an open cable outlet if that outlet is no longer required. To do this the cable outlet 10 that is no longer required is simply removed and replaced by a correspondingly sized sealing element (not shown in the drawings) for example a plastics or metal disc, or a blank stopper. If a blank stopper is used this may have heat-shrinkable regions for the subsequent re-insertion of a cable.

The described exemplary embodiment can be modified without departing from the basic idea of the invention. For example, the two-plate base 4 can also be used in conjunction with couplers of other shapes or as a simple divider sleeve cover, and in virtually the same manner as that described in DE-OS 3124044.

## Claims

1. Method of sealing a plurality of cables to a base comprising apertured first and second plates through which they pass, the method being characterised by
   a) inserting a plurality of cable outlets, each having a cylindrical body and an end flange extending from one end thereof, through an opening in the first plate so that each end flange of respective cable outlets cooperates with a shoulder in the first plate,
   b) securing the second plate adjacent the first plate to sandwich the flanges of the cable outlets between the first and second plates, and thereby prevent relative axial movement of the end plates of the cable outlets and the plates and
   c) inserting cables into the cable outlets and shrinking the outlets onto the inserted cables.

2. Method according to claim 1, wherein the cable outlets are heat recoverable.

3. An assembly for sealing a plurality of cables to a base (4) through which they pass, wherein a base (4) comprising first and second plates (5,12) having a plurality of corresponding openings (7,13,14) therein, through each of which one or more cables may pass, characterised in that:
   a) at least one of the said first and second plates is provided in the region of each opening (6,7,13,16) therethrough with an annular shoulder (8); and
   b) a plurality of cable outlets which can be removably inserted into respective opening in the base (4) and which each have an end flange (9) which cooperates with the shoulder (8) in the said plate(s);
   c) wherein the plates themselves and the openings in the plates (6,12) are arranged so that the plates can sandwich the flanges (9) of the cable outlets between them, thereby substantially preventing relative axial movement between the end flanges (9) of the cable outlets and the plates (5,12).

4. An assembly according to claim 3, wherein the base can be secured to a cover to form a hollow enclosure and wherein the first plate (5) is positioned so that on assembly with the cover it lies outwardly of the enclosure, and the second plate (12) is positioned so that on assembly with the cover it lies inwardly of the enclosure.

5. An assembly according to claim 4, wherein the said shoulder (8) is provided in the said first plate (5), which shoulder supports said end flange (9).

6. An assembly according to claim 4 or 5, wherein the second plate (12) is positioned so that on assembly of the base with the cover it faces inwardly of the enclosure, and the openings (13, 14) in the second plate (12) are substantially in alignment with the inner diameter of the associated cable outlet (10).

**7.** An assembly according to claims 3 to 6, wherein the cable outlets are radially heat shrinkable.

**8.** An assembly according to claims 3 to 7, comprising a sealing ring (11) or a sealing composition positioned between each of said annular shoulders (8) and each of said end flanges (9) of the associated cable outlets (10).

**9.** An assembly according to claims 3 to 8, wherein the first and second plates are subtantially circular, the second plate (12) having a diameter which is smaller than that of the first plate (5) so that the base (4) can be assembled, in use, onto an end flange (2) of the cover (1) by securing the flange (2) to the edge of the first plate (5) thereby also first fixing the second plate, which in the assembled arrangement faces inwardly of the enclosure.

**10.** An assembly according to claim 9 characterised in that the base (4) is arranged so that on assembly with the cover (1) an approximately triangular space for receiving a sealing agent is formed between the end flange (2) of the cover (1) and the edges of the plates (5, 12).

**11.** An assembly according to claims 3 to 10 which additionally comprises a plug member, similarly sized to the cable outlet, wherein the plates can be separated, and a cable outlet removed and replaced by the said plug member, thereby sealing an opening which is no longer required.

**Patentansprüche**

**1.** Verfahren zum Abdichten von Kabeln gegenüber einem Grundkörper mit einer ersten und zweiten Platte mit von den Kabeln durchsetzten Öffnungen, gekennzeichnet durch
   a) Einsetzen einer Mehrzahl von Kabeleingängen, die jeweils einen zylindrischen Aufbau mit einem sich von einem Ende erstrekkenden Endbund aufweisen, durch eine Öffnung in der ersten Platte, so daß jeder Endbund der jeweiligen Kabeleingänge mit einer Schulter in der ersten Platte zusammenwirkt,
   b) Befestigen der zweiten Platte benachbart zur ersten Platte, um die Bünde der Kabeleingänge zwischen der ersten und zweiten Platte einzuklemmen und dadurch Behindern einer axialen Relativbewegung der Endplatten der Kabeleingänge und der Platten und
   c) Einführen der Kabel in die Kabeleingänge und Aufschrumpfen der Kabeleingänge auf die eingeführten Kabel.

**2.** Verfahren nach Anspruch 1, dadurch gekennzeichnet, daß die Kabeleingänge wärmeschrumpffähig sind.

**3.** Vorrichtung zum Abdichten einer Vielzahl von Kabeln gegenüber einem von diesen durchsetzten Grundkörper (4), wobei der Grundkörper (4) eine erste und eine zweite Platte (5,12) mit einer Vielzahl korrespondierender Öffnungen (7,13,14) aufweist, durch die jeweils ein oder mehrere Kabel hindurchführbar sind, dadurch gekennzeichnet,
   a) daß wenigstens eine der ersten und zweiten Platten im Bereich jeder Öffnung (6,7,13,16) mit einer Ringschulter (8) versehen ist; und
   b) daß eine Mehrzahl von Kabeleingängen vorgesehen ist, die entnehmbar in die jeweils entsprechende Öffnung im Grundkörper (4) einfügbar ist und die jeweils einen Endbund (9) aufweist, welcher mit der Schulter (8) in der bzw. den Platte(n) zusammenwirkt;
   c) wobei die Platten selbst und die Öffnungen in den Platten (6,12) derart angeordnet sind, daß die Platten die Bünde (9) der Kabeleingänge zwischen sich einklemmen und dadurch im wesentlichen eine axiale Relativbewegung zwischen den Endbünden (9) der Kabeleingänge und den Platten (5,12) verhindern.

**4.** Vorrichtung nach Anspruch 3, dadurch gekennzeichnet, daß der Grundkörper an einem topfförmigen Deckel zur Bildung eines hohlen Gehäuses befestigbar ist und daß die erste Platte (5) derart angeordnet ist, daß in Verbindung mit dem Deckel sie außerhalb des Gehäuses liegt, und daß die zweite Platte (12) derart angeordnet ist, daß sie in Verbindung mit dem Deckel innerhalb des Gehäuses liegt.

**5.** Vorrichtung nach Anspruch 4, dadurch gekennzeichnet, daß die den Endbund (9) stützende Schulter (8) in der ersten Platte (5) vorgesehen ist.

**6.** Vorrichtung nach Anspruch 4 oder 5, dadurch gekennzeichnet, daß die zweite Platte (12) derart angeordnet ist, daß sie bei Verbindung des Grundkörpers mit dem Deckel innerhalb des Gehäuses liegt und daß die Öffnungen (13,14) in der zweiten Platte (12) im wesentlichen mit dem inneren Durchmesser der verbundenen Kabeleingänge (10) fluchten.

7. Vorrichtung nach Ansprüchen 3 bis 6,
dadurch gekennzeichnet,
daß die Kabeleingänge in radialer Richtung wärmeschrumpffähig sind.

8. Vorrichtung nach Ansprüchen 3 bis 7,
dadurch gekennzeichnet,
daß zwischen jeder Ringschulter (8) und jedem der Endbünde (9) der verbundenen Kabeleingänge (10) ein Dichtring (11) oder eine Dichtmasse vorgesehen ist.

9. Vorrichtung nach Ansprüchen 3 bis 8,
dadurch gekennzeichnet,
daß die erste und zweite Platte im wesentlichen kreisförmig sind, wobei die zweite Platte (12) einen derart kleineren Durchmesser als die erste Platte (5) aufweist, daß der Grundkörper (4) im Gebrauch am Endbund (2) des Deckels (1) durch Befestigung des Bundes (2) am Rand der ersten Platte (5) verbindbar ist, wobei dadurch auch zuerst die zweite Platte gesichert wird, die sich in zusammengesetzter Anordnung innerhalb des Gehäuses befindet.

10. Vorrichtung nach Anspruch 9,
dadurch gekennzeichnet,
daß der Grundkörper derart angeordnet ist, daß in Verbindung mit dem Deckel (1) ein annähernd dreieckiger Zwischenraum zur Aufnahme einer Dichtmasse zwischen dem Endbund (2) des Deckels (1) und den Rändern der Platten (5,12) gebildet ist.

11. Vorrichtung nach Ansprüchen 3 bis 10,
gekennzeichnet durch
ein Stopfenelement ähnlicher Größe wie der Kabeleingang, wobei die Platten trennbar sind und ein Kabeleingang entfernbar und durch das Stopfenelement ersetzbar ist, welches dabei eine nicht mehr benötigte Öffnung abdichtet.

**Revendications**

1. Procédé pour réaliser l'étanchéité d'une pluralité de câbles par rapport à un socle comportant une première et une seconde plaques à orifices à travers lesquelles ils passent, le procédé étant caractérisé par:

   à) l'introduction d'une pluralité de sorties de câbles, ayant chacune un corps cylindrique et un rebord d'extrémité s'étendant depuis une extrémité de celui-ci, à travers un orifice de la première plaque de façon que chaque rebord d'extrémité des sorties de câbles correspondantes coopère avec un épaulement présent dans la première plaque,

   b) la fixation de la seconde plaque au voisinage immédiat de la première plaque de façon à prendre les rebords des sorties de câbles en sandwich entre les première et seconde plaques et à empêcher de ce fait tout déplacement axial relatif des plaques d'extrémités des sorties de câbles et des plaques, et

   c) l'introduction des câbles dans les sorties de câbles et le rétrécissement des sorties sur les câbles introduits.

2. Procédé selon la revendication 1, dans lequel les sorties de câbles sont thermorestaurables.

3. Système pour réaliser l'étanchéité d'une pluralité de câbles par rapport à un socle (4) à travers lequel ils passent, dans lequel un socle (4) comporte une première et une seconde plaques (5, 12) comportant une pluralité d'orifices correspondants (7, 13, 14), à travers chacun desquels peuvent passer un ou plusieurs câbles, caractérise en ce que:

   a) au moins une desdites première et seconde plaques est pourvue d'un épaulement annulaire (8) dans la région de chaque orifice (6, 7, 13, 16) ménagé à travers celle-ci; et

   b) une pluralité de sorties de câbles qui peuvent être introduites de manière amovible dans un orifice correspondant du socle (4) et qui ont chacune un rebord (9) d'extrémité qui coopère avec l'épaulement (8) présent dans ladite/desdites plaque(s);

   c) dans lequel les plaques elles-mêmes, et les orifices des plaques (6, 12), sont agencés de façon que les plaques puissent prendre en sandwich entre elles les rebords (9) des sorties de câbles, en empêchant de ce fait sensiblement tout déplacement axial relatif entre les rebords (9) d'extrémité des sorties de câbles et les plaques (5, 12).

4. Système selon la revendication 3, dans lequel le socle peut être fixé à un capot pour former une enceinte creuse et dans lequel la première plaque (5) est disposée de façon que, lorsqu'on l'assemble avec le capot, elle soit orientée vers l'extérieur de l'enceinte, et la seconde plaque est disposée de façon que, lorsqu'elle est assemblée avec le capot, elle soit orientée vers l'intérieur de l'enceinte.

5. Système selon la revendication 4, dans lequel ledit épaulement (8) est réalisé dans ladite première plaque (5), cet épaulement supportant ledit rebord (9) d'extrémité.

6. Système selon la revendication 4 ou 5, dans lequel la seconde plaque (12) est disposée de façon que, au moment de l'assemblage du socle avec le capot, elle soit orientée vers l'intérieur de l'enceinte, et les orifices (13, 14) de la seconde plaque (12) sont sensiblement alignés avec le diamètre intérieur de la sortie (10) de câble correspondante.

7. Système selon les revendications 3 à 6, dans lequel les sorties de câble sont thermorétractables dans la direction radiale.

8. Système selon les revendications 3 à 7, comportant un anneau d'étanchéité (11) ou une pâte d'étanchéité mise en place entre chacun desdits épaulements annulaires (8) et chacun desdits rebords (9) d'extrémité des sorties (10) de câbles correspondantes.

9. Système selon les revendications 3 à 8, dans lequel les première et seconde plaques sont sensiblement circulaires, la seconde plaque (12) ayant un diamètre inférieur à celui de la première plaque (5) de façon que le socle (4) puisse être assemblé, au moment de son utilisation, sur un rebord (2) d'extrémité du capot (1) en fixant le rebord (2) au bord de la première plaque (5) en fixant également de ce fait d'abord la seconde plaque, qui, dans l'agencement assemblé, est orientée vers l'intérieur de l'enceinte.

10. Système selon la revendication 9, caractérisé en ce que le socle (4) est agencé de façon que, au moment de l'assemblage avec le capot (1), un espace sensiblement triangulaire destiné à recevoir un agent d'étanchéité soit formé entre le rebord (2) d'extrémité du capot (1) et les bords des plaques (5, 12).

11. Système selon les revendications 3 à 10, comportant en outre un élément formant bouchon, de mêmes dimensions que la sortie de câble, dans lequel les plaques peuvent être séparées, et une sortie de câble peut être enlevée et remplacée par ledit élément formant bouchon, en obturant de ce fait d'une manière étanche un orifice qui n'est plus nécessaire.

Fig.1

Fig.2